# DEMANDE DE BREVET EUROPEEN

(11) **EP 0 625 488 A1**
(43) Date de publication de la demande: **23.11.1994**
(21) Numéro de dépôt: 94401096.6
(22) Date de dépôt: 18.05.1994
(51) Int. Cl.: C04B 28/26, C09K 17/00

(54) **Coulis liquide pour consolidation ou étanchement des sols**

(30) Priorité: 21.05.1993 FR 9306115
(71) Demandeur: RHONE-POULENC CHIMIE, 92408 Courbevoie Cédex (FR)
(72) Inventeur: Frouin, Laurent, F-94240 L'Hay Les Roses (FR); Pennavaire, Maryse, F-93230 Romainville (FR)
(74) Mandataire: Dubruc, Philippe

(57) **Abrégé**

Coulis, caractérisé en ce qu'il est susceptible d'être obtenu par mise en contact d'une solution de silicate de métal alcalin, d'une solution de polyphosphate de métal alcalin et d'une solution d'aluminate de métal alcalin.

Procédé de préparation de ce coulis, ce procédé pouvant être mis en oeuvre pour I'étanchement et/ou la consolidation des sols et/ou des matériaux de construction par injection.

## Description

La présente invention concerne un coulis essentiellement, voire entièrement, minéral et un procédé de préparation de ce coulis, ce procédé pouvant être mis en oeuvre pour l'étanchement et/ou la consolidation des sols et/ou des matériaux de construction par injection.

Le traitement des sols et/ou des matériaux de construction par injection consiste à remplir des fissures, des cavités ou des interstices avec des coulis de natures diverses destinés à modifier les caractéristiques du terrain ainsi traité.

Ces modifications portent soit sur l'amélioration des propriétés mécaniques des terrains dans le cas de la consolidation, soit sur la diminution de la perméabilité dans le cas de l'étanchement. Il est possible également de traiter par injection pour modifier les deux propriétés.

Jusqu'à ces dernières années, I'étanchement et la consolidation des sols ou des matériaux de construction s'effectuaient principalement par injection de coulis organiques. Mais, les produits de synérèse de ces coulis (décomposition des produits chimiques injectés ou formés) occasionnent des pollutions des nappes phréatiques et des eaux de surface.

Ainsi, le soucis majeur, à l'heure actuelle, des spécialistes injecteurs dans le domaine de l'étanchement et/ou de la consolidation des sols est la préservation de la qualité des nappes phréatiques et des eaux de surface telles que cours d'eau et retenues.

Ce soucis a donc conduit à l'utilisation de coulis minéraux.

Afin de satisfaire techniquement et économiquement aux nouvelles contraintes imposées par ces considérations écologiques, les recherches ont conduit à des résultats publiés notamment dans des brevets.

Ainsi, dans le brevet français n° 2.571.734, il est décrit un coulis aqueux injectable pour la consolidation et/ou l'étanchement des sols qui comprend des fines particules de silice amorphe et des particules de chaux éteinte.

Toutefois, ce coulis présente l'inconvénient d'avoir un temps de prise trop long (d'environ 2 jours).

On a également décrit dans le brevet français n° 2.528.441 un agent d'étanchement et/ou de consolidation de sols comprenant une solution sodique concentrée de silice spécifique et, éventuellement, de la chaux ou un sel de calcium. La silice dissoute réagit avec le calcium pour former des cristaux de silicates de calcium hydratés.

Cependant, ces coulis présentent les inconvénients soit de posséder des propriétés mécaniques finales peu satisfaisantes, soit d'avoir un temps de prise trop court, incompatible avec l'application souhaitée, soit encore d'être trop visqueux initialement.

Il est donc souhaitable et c'est un des buts de la présente invention de proposer un procédé de préparation d'un coulis permettant de contrôler le temps de prise.

Un autre but de la présente invention est de proposer un coulis présentant, après durcissement, des propriétés mécaniques satisfaisantes et des caractéristiques non polluantes dans le cas d'une utilisation de ce coulis dans l'étanchement et/ou la consolidation de sols ou de matériaux de construction.

Ces buts et d'autres sont atteints par la présente invention qui concerne en effet un coulis caractérisé en ce qu'il est susceptible d'être obtenu par la mise en contact d'une solution de silicate de métal alcalin, d'une solution de polyphosphate de métal alcalin et d'une solution d'aluminate de métal alcalin.

L'invention couvre aussi le procédé de préparation d'un coulis, caractérisé en ce qu'il met en oeuvre une solution de silicate de métal alcalin, une solution de polyphosphate de métal alcalin, une solution d'aluminate de métal alcalin.

Le coulis selon la présente invention présente l'avantage d'être liquide avant durcissement, ce qui permet de l'utiliser dans une gamme de perméabilité de sol particulièrement large.

Le procédé selon la présente invention présente l'avantage d'être simple et économique de mise en oeuvre. Il présente en outre l'avantage de préparer un coulis homogène sans qu'aucune décantation ne soit observée.

D'autres caractéristiques, détails et avantages de l'invention apparaîtront plus clairement à la lecture de la description qui va suivre et des exemples donnés à titre non limitatif.

Le coulis et le procédé de préparation de ce coulis selon l'invention comportent ou mettent en oeuvre, comme il l'a été stipulé ci-dessus, un certain nombre d'éléments qui vont maintenant être étudiés plus précisément. Pour tout le reste de la description, tout ce qui est décrit au sujet desdits éléments s'applique tant au coulis qu'au procédé qui utilisent ces éléments.

De préférence, le métal alcalin présent dans les composés mis en oeuvre dans le procédé de la présente invention est le sodium. Pour des raisons de clarté et de simplicité, dans ce qui suit ou ce qui précède, si le terme "sodium" ou "soude" sont employés, il peuvent respectivement désigner les termes plus génériques "métal alcalin" ou "hydroxyde de métal alcalin".

De manière avantageuse, le procédé met en oeuvre une solution de silicate de métal alcalin de rapport pondéral SiO2/M20 supérieur ou égal à 1,3, de préférence supérieur ou égal à 2; M représentant un métal alcalin. Dans ce qui suit, ce rapport sera nommé Ri.

La solution de silicate de métal alcalin possède généralement environ 10 à 55% d'extrait sec, de préférence 30 à 50% d'extrait sec.

Pour des raisons pratiques tenant notamment compte de la viscosité du coulis à préparer, la solution de silicate de métal alcalin est introduite de telle sorte que sa teneur en SiO2 dans le coulis soit de préférence inférieure ou égale à 20% en poids, et de façon encore plus préférentielle comprise entre environ 5 et 15 % en poids.

Selon l'invention, on entend par solution de polyphosphate de métal alcalin, toute solution de polyphosphate de longueur de chaîne moyenne supérieure ou égale à 3. Ainsi, on peut citer, à titre d'exemples, le tripolyphosphate de sodium, le pentapolyphosphate de sodium et l'hexamétaphosphate de sodium. Ces produits sont couramment utilisés et vendus.

On utilise généralement une solution aqueuse de polyphosphate de sodium. La solution aqueuse utilisée est préférentiellement proche de la saturation en polyphosphate. Ainsi, à titre d'exemples, on peut utiliser une solution aqueuse de tripolyphosphate de sodium à environ 8% en poids de P2O5, une solution aqueuse de pentapolyphosphate de sodium à environ 23% en poids de P2O5 et une solution aqueuse d'hexamétaphosphate de sodium à environ 28% en poids de P2O5.

De manière pratique et préférentielle, les quantités introduites de silicate et de polyphosphate sont telles que le rapport pondéral SiO2IP2O5 est supérieur ou égal à 1.

La solution d'aluminate de métal alcalin utilisée dans le procédé de la présente invention peut être une solution aqueuse d'aluminate de sodium.

Cette solution aqueuse d'aluminate de sodium est obtenue par tout moyen connu en soi. On peut notamment l'obtenir par ajout d'eau à une poudre d'aluminate de sodium.

Lors de la préparation de la solution aqueuse d'aluminate de sodium ou postérieurement, notamment lors de la mise en oeuvre du procédé selon la présente invention, on ajoute avantageusement de la soude.

Ainsi, la quantité de métal alcalin total correspond préférentiellement à la quantité nécessaire pour que le rapport pondéral final SiO2IM2O soit inférieur à 1,5, de préférence pour qu'il soit compris entre 0,5 et 1,3, de façon encore plus préférentielle entre 0,6 et 1,1; M représentant le métal alcalin total. Par métal alcalin total, on entend le métal alcalin introduit sous toutes ses formes lors de la mise en oeuvre du procédé, et plus particulièrement le métal alcalin provenant des solutions de silicate, d'aluminate, de polyphosphate ou d'hydroxyde de métal alcalin. Dans ce qui suit, ce rapport sera nommé Rf.

Selon un mode particulier et préféré de réalisation de l'invention, le procédé est caractérisé en ce que les solutions de silicate de métal alcalin et de polyphosphate de métal alcalin sont mélangées et en ce que la solution d'aluminate de métal alcalin est ensuite ajoutée à ce dit mélange. Selon ce mode particulier et préféré, l'effet de retard à la prise du coulis ainsi obtenu en est d'autant plus accentué. Selon ce mode particulier et dans le cas où de la soude est ajoutée, la soude est ajoutée soit simultanément avec la solution d'aluminate de sodium, soit postérieurement.

On préfère, selon l'invention, mettre en oeuvre les solutions de silicate de métal alcalin et d'aluminate de métal alcalin de telle sorte que le rapport molaire Al/Si dans le coulis soit compris entre 0,01 et 0,5, de préférence compris entre 0,05 et 0,4. Le coulis ainsi obtenu prend tardivement, tout en évitant de présenter une viscosité trop élevée, néfaste à l'application consolidation et/ou étanchement des sols ou des matériaux de construction.

On préfère également mettre en oeuvre la solution de polyphosphate de métal alcalin de telle sorte que sa teneur en P2O5 dans le coulis soit comprise entre environ 0,5 et 5% en poids, de préférence comprise entre 0,8 et 4% en poids, pour un coulis contenant au plus environ 20 % en poids de SiO2.

Ainsi, un coulis particulièrement avantageux à préparer selon l'invention est caractérisé en ce qu'il comprend environ :
- jusqu'à 20 % en poids de SiO2;
- de 0,5 à 5 % en poids de P2O5, le rapport pondéral SiO2IP2O5 étant supérieur ou égal à 1;
- un rapport molaire Al/Si compris entre 0,01 et 0,5;
- un rapport pondéral SiO2IM2O inférieur ou égal à 1,5; M représentant le métal alcalin total.

Préférentiellement, le coulis selon l'invention est caractérisé en ce qu'il comprend environ :
- de 5 à 15 % en poids de SiO2;
- de 0,8 à 4 % en poids de P2O5;
- un rapport molaire Al/Si compris entre 0,05 et 0,4;
- un rapport pondéral SiO2/M2O compris entre 0,5 et 1,3, de manière encore plus préférentielle compris entre 0,6 et 1,1; M représentant le métal alcalin total.

Selon une variante de l'invention, le procédé est caractérisé en ce qu'il met également en oeuvre de fines particules de silice, telles que notamment de la fumée de silice, de préférence condensée, ou de la silice de précipitation. Cette variante est particulièrement intéressante lorsque l'on veut obtenir un coulis de faible viscosité initiale, tout en présentant après durcissement des propriétés mécaniques satisfaisantes. La quantité maximale de fines particules de silice à ajouter peut donc aller jusqu'à ce que la teneur en SiO2 dans le coulis soit de 20%, de manière encore plus préférentielle de 15% (cette teneur correspond alors à la quantité de silice présente dans la solution de silicate de métal alcalin et à celle présente dans les fines particules de silice).

Dans le cas où le procédé décrit ci-dessus est mis en oeuvre pour étanchement et/ou la consolidation des sols ou des matériaux de construction, les composés utilisés sont soit injectés séparément dans le matériau à traiter, soit préférentiellement mélangés préalablement pour être ensuite injectés ensemble dans le matériau à injecter. La première variante présente l'inconvénient d'être compliquée dans sa mise en oeuvre, tout en créant des incertitudes sur la qualité du traitement (risque d'une présence hétérogène des constituants dans les interstices).

Les pourcentages, dans ce qui suit et ce qui précède, sont exprimés en poids sauf mention contraire.

Des exemples illustrant les divers aspects de l'invention, sans en limiter sa portée, vont maintenant être donnés.

### Exemple 1

Dans un bêcher, on mélange :
- une solution de silicate de sodium de rapport pondéral Ri (SiO2/Na2O) = 3,3 et d'extrait sec 33 %,
- une solution de pentapolyphosphate de sodium à environ 23 % en poids de P2O5.

On ajoute ensuite dans ce bêcher une solution sodique d'aluminate de sodium préparée à partir d'aluminate de sodium en poudre commercialisé par la société Carlo Erba ® (56% Al2O3; 37% Na2O).

Les quantités des produits introduits sont telles que le coulis obtenu comprenne une teneur en SiO2 de 10%, un rapport molaire Al/Si de 0,28, une teneur en P2O5 de 0,93 % et un rapport Rf de 1,02, la teneur en eau étant de 77%.

Le temps de prise qui correspond au temps mis par le coulis ainsi obtenu pour ne plus couler le long de la paroi du bêcher quand on renverse celui-ci est de 4 minutes.

### Exemple 2

On procède de la même façon que dans l'exemple précédent, les différences résident en ce que le rapport molaire Al/Si est de 0,19 et que Rf est de 0,67.

Le temps de prise qui correspond au temps mis par le coulis ainsi obtenu pour ne plus couler le long de la paroi du bêcher quand on renverse celui-ci est de 20 heures.

## Revendications

**1./** Coulis caractérisé en ce qu'il est susceptible d'être obtenu par la mise en contact d'une solution de silicate de métal alcalin, d'une solution de polyphosphate de métal alcalin et d'une solution d'aluminate de métal alcalin.

**2./** Coulis selon la revendication précédente, caractérisé en ce que le métal alcalin est le sodium.

**3/.** Coulis selon l'une quelconque des revendications précédentes, caractérisé en ce que la solution de silicate de métal alcalin présente un rapport pondéral SiO2/M2O supérieur ou égal à 1,3, de préférence supérieur ou égal à 2; M représentant un métal alcalin.

**4/.** Coulis selon l'une quelconque des revendications précédentes, caractérisé en ce que la solution de silicate de métal alcalin possède environ 10 à 55% d'extrait sec, de préférence 30 à 50% d'extrait sec.

**5/.** Coulis selon l'une quelconque des revendications précédentes, caractérisé en ce que la solution de silicate de métal alcalin est introduite de telle sorte que sa teneur en SiO2 dans le coulis soit inférieure ou égale à 20% en poids, et de façon préférentielle comprise entre environ 5 et 15 % en poids.

**6/.** Coulis selon l'une quelconque des revendications précédentes, caractérisé en ce que la solution de polyphosphate est une solution de tripolyphosphate de métal alcalin, de pentapolyphosphate de métal alcalin ou d'hexamétaphosphate de métal alcalin.

**7/.** Coulis selon l'une quelconque des revendications précédentes, caractérisé en ce que la solution de polyphosphate est une solution aqueuse préférentiellement proche de la saturation.

**8/.** Coulis selon l'une quelconque des revendications précédentes, caractérisé en ce que les quantités introduites de silicate et de polyphosphate sont telles que le rapport pondéral SiO2/P2O5 est supérieur ou égal à 1.

**9/.** Coulis selon l'une quelconque des revendications précédentes, caractérisé en ce que la solution d'aluminate de métal alcalin est une solution aqueuse d'aluminate.

**10/.** Coulis selon l'une quelconque des revendications précédentes, caractérisé en ce que de l'hydroxyde de métal alcalin est ajouté.

**11/.** Coulis selon l'une quelconque des revendications précédentes, caractérisé en ce que la quantité de métal alcalin total correspond à la quantité nécessaire pour que le rapport pondéral final SiO2/M2O soit inférieur à 1,5, de préférence pour qu'il soit compris entre 0,5 et 1,3; M représentant le métal alcalin total.

**12/.** Coulis selon l'une quelconque des revendications précédentes, caractérisé en ce que les solutions de silicate de métal alcalin et de polyphosphate de métal alcalin sont mélangées et en ce que la solution d'aluminate de métal alcalin est ensuite ajoutée à ce dit mélange.

**13/.** Coulis selon l'une quelconque des revendications précédentes, caractérisé en ce que le rapport molaire Al/Si dans le coulis est compris entre 0,01 et 0,5, de préférence compris entre 0,05 et 0,4.

**14/.** Coulis selon l'une quelconque des revendications précédentes, caractérisé en ce que la teneur en P2O5 dans le coulis est comprise entre environ 1 et 5% en poids pour un coulis contenant au plus environ 20 % en poids de SiO2.

**15/.** Coulis selon l'une quelconque des revendications précédentes, caractérisé en ce que de fines particules de silice sont ajoutées.

**16/.** Coulis, caractérisé en ce qu'il présente environ :
- jusqu'à 20 % en poids de SiO2;
- de 0,5 à 5 % en poids de P2O5, le rapport pondéral SiO2/P2O5 étant supérieur ou égal à 1;
- un rapport molaire Al/Si compris entre 0,01 et 0,5;
- un rapport pondéral SiO2/M2O inférieur ou égal à 1,5; M représentant le métal alcalin total.

**17/.** Coulis selon la revendication précédente, caractérisé en ce qu'il présente environ :
- de 5 à 15 % en poids de SiO2;
- de 0,8 à 4 % en poids de P2O5, le rapport pondéral SiO2/P2O5 étant supérieur ou égal à 1;
- un rapport molaire Al/Si compris entre 0,05 et 0,4;
- un rapport pondéral SiO2/M2O compris entre 0,5 et 1,3, de manière encore plus préférentielle compris entre 0,6 et 1,1; M représentant le métal alcalin total.

**18/.** Utilisation du coulis selon l'une quelconque des revendications 1 à 17 pour étanchement et/ou la consolidation des sols et/ou des matériaux de construction par injection.
